# EUROPÄISCHE PATENTSCHRIFT

(11) **EP 3 095 576 B1**
(45) Veröffentlichungstag und Bekanntmachung des Hinweises auf die Patenterteilung: **18.07.2018**
(21) Anmeldenummer: 15169017.9
(22) Anmeldetag: 22.05.2015
(51) Int. Cl.: B29C 35/02, B65G 17/32, B65G 37/00, F26B 15/14

(54) **FORMKÖRPER-BEHANDLUNGSVORRICHTUNG**
MOULD TREATMENT DEVICE
DISPOSITIF DE TRAITEMENT DE CORPS DE FORMAGE

(43) Veröffentlichungstag der Anmeldung: 23.11.2016
(73) Patentinhaber: EHA Composite Machinery GmbH, 35239 Steffenberg (DE)
(72) Erfinder: Neubert, Mike, 35232 Dautphetal (DE)
(74) Vertreter: Rohmann, Michael

(56) Entgegenhaltungen:
- NL-A- 6 716 975
- US-A- 2 616 549
- US-A- 2 663 281
- US-A- 2 803 332
- US-A- 2 997 739
- US-A- 3 192 646

## Beschreibung

Die Erfindung betrifft eine Formkörper-Behandlungsvorrichtung mit zumindest einer Behandlungsstation, in die Formkörper zur Behandlung mittels einer Antriebseinrichtung einführbar sind, wobei die Antriebseinrichtung zumindest einen sich in Förderrichtung der Formkörper erstreckenden Antriebsstrang aufweist, wobei der Antriebsstrang - vorzugsweise zumindest zwei Antriebsstränge - in Förderrichtung der Formkörper bewegbar ist/sind. - Formkörper meint im Rahmen der Erfindung insbesondere voluminöse Formteile, deren Erstreckung quer zur Förderrichtung in der Regel größer ist als in Förderrichtung. Die Erstreckung der Formkörper kann aber grundsätzlich auch in Förderrichtung und quer zur Förderrichtung gleich sein oder in Förderrichtung größer sein als quer zur Förderrichtung. Bei den Formkörpern handelt es sich beispielsweise um Behälter, Rohre oder dergleichen. Behandlung meint im Rahmen der Erfindung insbesondere die Behandlung der Oberflächen der Formkörper und vor allem die thermische Behandlung dieser Oberflächen sowie die Beschichtung, beispielsweise die Lackierung der Formkörperoberflächen.

Formkörper-Behandlungsvorrichtungen der vorstehend beschriebenen Art sind aus der Praxis grundsätzlich bekannt. Bei diesen bekannten Vorrichtungen sind in der Regel zwei sich in Förderrichtung erstreckende Antriebsstränge in Form von Antriebsketten bzw. Transportketten vorgesehen. An gegenüberliegenden Enden der Formkörper sind Fixierungszapfen angeschlossen, die wiederum jeweils über Aufnahmeelemente in Form von Aufnahmeschalen an die Antriebsketten angeschlossen sind. Bei den Formkörpern handelt es sich insbesondere um im Wesentlichen zylinderförmige Wickelkörper, die an ihrer Oberfläche aufgewickelte, mit flüssigem duroplastischem Kunststoff getränkte Faserstränge aufweisen. Die Behandlungsstation ist als Aushärtkammer eines Behandlungsofens und/oder als Beschichtungsstation, beispielsweise als Lackierstation ausgebildet. Die Formkörper werden mittels der Antriebsketten durch den Behandlungsofen zwecks Aushärtung des flüssigen Kunststoffes und/oder durch die Beschichtungsstation zur Beschichtung des eventuell bereits ausgehärteten Kunststoffes geleitet. Die Fixierungszapfen der Formkörper sind jeweils über Drehlager an die Aufnahmeschalen der Antriebsketten angeschlossen, so dass eine Rotation der Formkörper möglich ist. Die Aufnahmeschalen sind an den Antriebsketten bzw. Transportketten fixiert. Bei diesen bekannten Formkörper-Behandlungsvorrichtungen haben die beiden Antriebsketten einen vorgegebenen festen Abstand voneinander. Um mit der Vorrichtung Formkörper mit unterschiedlichen Längen behandeln zu können, müssen unterschiedlich lange Fixierungszapfen eingesetzt werden. Das hat den Nachteil, dass eine Vielzahl von unterschiedlichen Fixierungszapfen vorgehalten werden muss. Weiterhin sind aus Stabilitätsgründen nicht beliebig lange Fixierungszapfen einsetzbar. Diese bekannten Maßnahmen sind aufwendig bzw. zeitaufwendig und kostspielig.

Es ist auch bereits bekannt, eine Antriebskette bzw. Transportkette quer zur Förderrichtung in der Breite zu verschieben um die Vorrichtung an unterschiedlich lange Formkörper anzupassen. Das macht ein aufwendiges Verstellen erforderlich. Außerdem muss immer eine Charge von Formkörpern durch die Behandlungsvorrichtung geführt werden, bevor die Vorrichtung durch Breitenverstellung einer Antriebskette auf eine andere Länge von Formkörpern eingestellt werden kann. Die bekannten Maßnahmen sind somit verbesserungsbedürftig.

Eine Formkörper-Behandlungsvorrichtung nach dem Oberbegriff des Patentanspruches 1 ist aus US 2 803 332 A bekannt. Diese Formkörper-Behandlungsvorrichtung weist mehrere Behandlungsstationen auf, in die Formkörper zur Behandlung mittels einer Antriebseinrichtung einführbar sind. Die Antriebseinrichtung weist zwei sich in Förderrichtung der Formkörper erstreckende Antriebsstränge auf. Dabei umfasst ein erster Antriebsstrang eine Mehrzahl von sich quer zur Förderrichtung erstreckenden Anschlusselementen. Fernerhin sind zwei Fixierungszapfen vorgesehen, die an gegenüberliegenden Enden des Formkörpers fixierbar sind, wobei beide Fixierungszapfen an den Antriebssträngen angeschlossen sind, so dass der zugeordnete Formkörper in Förderrichtung bewegbar ist. Die Fixierungszapfen sind mittels Schrauben an Anschlusskörpern befestigt, welche mittels eines einfachen Formanschlusses an die Anschlusselemente angeschlossen sind. Außerdem erweist die Vorrichtung eine Rotationseinrichtung auf, die zwei sich in Förderrichtung erstreckende Rotationsstränge umfasst. Die Fixierungszapfen können zur Rotation des Formkörpers mit den Rotationssträngen wechselwirken. Diese bekannte Formkörper-Behandlungsvorrichtung hat sich in der Praxis nicht bewährt. Sie ist relativ komplex aufgebaut und zudem störungsanfällig.

Auch aus NL 6 716 975 A ist eine Formkörper-Behandlungsvorrichtung bekannt. Diese Vorrichtung weist eine Behandlungsstation auf, in die Formkörper zur Behandlung mittels einer Antriebseinrichtung einführbar sind. Die Antriebseinrichtung umfasst drei sich in Förderrichtung der Formkörper erstreckende Antriebsstränge. Auch diese Vorrichtung ist sehr komplex aufgebaut und zeichnet sich durch eine aufwendige Mechanik aus. Die Vorrichtung ist ebenfalls relativ störanfällig.

Weitere Vorrichtungen sind im Übrigen aus US 2 997 739 A, aus US 2 616 549 A, aus US 2 663 281 A und aus US 3 192 646 A bekannt. Diese aus dem Stand der Technik bekannten Vorrichtungen haben sich aber allesamt nicht durchgesetzt bzw. bewährt.
Der Erfindung liegt das technische Problem zugrunde, eine Behandlungsvorrichtung der eingangs genannten Art anzugeben, die es erlaubt, Formkörper unterschiedlicher Längen zu fördern bzw. zu behandeln und die sich nichtsdestoweniger durch Einfachheit und geringen Aufwand bzw. geringen Kostenaufwand auszeichnet.

Zur Lösung dieses technischen Problems lehrt die Erfindung eine Formkörper-Behandlungsvorrichtung mit zumindest einer Behandlungsstation, in die Formkörper zur Behandlung mittels einer Antriebseinrichtung einführbar sind, wobei die Antriebseinrichtung zumindest einen sich in Förderrichtung der Formkörper erstreckenden Antriebsstrang aufweist, wobei der Antriebsstrang - vorzugsweise zumindest zwei Antriebsstränge - in Förderrichtung der Formkörper bewegbar ist/sind,
wobei zumindest zwei Fixierungszapfen vorgesehen sind, die an gegenüberliegenden Enden eines Formkörpers fixierbar sind bzw. fixiert sind, wobei zumindest ein Fixierungszapfen an einem Antriebsstrang angeschlossen ist - vorzugsweise zwei Fixierungszapfen jeweils an einem Antriebsstrang angeschlossen sind, - so dass der zugeordnete Formkörper mittels des bewegten Antriebsstranges bzw. mittels der bewegten Antriebsstränge in Förderrichtung bewegbar bzw. förderbar ist,
wobei zumindest ein bzw. ein erster Antriebsstrang eine Mehrzahl von sich quer zur Förderrichtung erstreckenden Anschlusselementen aufweist, wobei der diesem ersten Antriebsstrang zugeordnete erste Fixierungszapfen an zumindest einem Anschlusselement dieses ersten Antriebsstranges angeschlossen ist, wobei die Länge L zumindest eines Teils dieser Anschlusselemente, vorzugsweise aller Anschlusselemente
- zumindest 30 % der Länge l_{Z} des Zapfenabschnittes des ersten Fixierungszapfens entspricht, welcher Zapfenabschnitt sich zwischen dem Formkörper bzw. dem dem ersten Antriebsstrang zugewandten Ende des Formkörpers und dem ersten Antriebsstrang erstreckt,
   und/oder
- zumindest 30 mm, vorzugsweise zumindest 35 mm und bevorzugt zumindest 50 mm beträgt,
wobei zumindest eine Rotationseinrichtung zum Rotieren der Formkörper um ihre Längsachse vorgesehen ist, wobei die Rotationseinrichtung in Form eines sich in Förderrichtung erstreckenden Rotationsstranges ausgebildet ist, wobei ein Fixierungszapfen zwecks Rotation des Formkörpers mit dem Rotationsstrang wechselwirkt,
wobei der erste Fixierungszapfen mittels zumindest eines Anschlusskörpers an zumindest ein Anschlusselement angeschlossen ist, wobei der Anschlusskörper auf den zumindest einen, vorzugsweise auf den zumindest zwei Anschlusselementen aufliegt, wobei der Anschlusskörper in Längsrichtung des ersten Fixierungszapfens verschiebbar ist, dadurch gekennzeichnet, dass der Anschlusskörper als scheibenförmiger bzw. plattenförmiger Anschlusskörper ausgebildet ist. Gemäß einer Ausführungsvariante sind die Formkörper quer zu ihrer Förderrichtung länger ausgebildet als in Förderrichtung. Die Ausdehnung der Formkörper kann in Förderrichtung und quer zur Förderrichtung aber auch gleich sein oder die Ausdehnung in Förderrichtung kann größer sein als die Ausdehnung quer zur Förderrichtung. - Es liegt weiterhin im Rahmen der Erfindung, dass sich die Längsachse der Formkörper bei ihrer Förderung durch die erfindungsgemäße Vorrichtung quer bzw. senkrecht zur Förderrichtung erstreckt. Zweckmäßigerweise sind die Formkörper zylinderförmig bzw. im Wesentlichen zylinderförmig ausgebildet oder zumindest in ihrem bezüglich ihrer Längsachse mittleren Bereich zylinderförmig bzw. im Wesentlichen zylinderförmig ausgebildet. Die Formkörper sind bevorzugt im Querschnitt rund bzw. kreisrund oder oval bzw. ellipsenförmig ausgebildet. Grundsätzlich können die Formkörper bzw. die voluminösen Formkörper aber auch andere geometrische Ausgestaltungen aufweisen. - Es liegt im Rahmen der Erfindung, dass jeweils ein Fixierungszapfen an den bezüglich seiner Längsachse gegenüberliegenden Enden eines Formkörpers fixiert ist. Zweckmäßigerweise sind die Formkörper an ihren den Fixierungszapfen zugeordneten Enden bzw. Stirnenden abgerundet bzw. kalottenförmig ausgebildet. Bei den Formkörpern kann es sich um Behälter, wie Flaschen oder dergleichen oder um Rohre oder ähnliche Hohlkörper handeln.

Die Antriebsstränge sind empfohlenermaßen als lineare bzw. im Wesentlichen lineare sich in Förderrichtung erstreckende Antriebsstränge ausgebildet. Zweckmäßigerweise sind die Antriebsstränge parallel bzw. im Wesentlichen parallel zueinander angeordnet.

Es liegt im Rahmen der Erfindung, dass die Anschlusselemente von zumindest einem Antriebsstrang oder von zumindest zwei bzw. zwei sich synchron bewegenden Antriebssträngen in Förderrichtung bewegt werden. Zweckmäßigerweise handelt es sich bei den Anschlusselementen um lineare Anschlusselemente, wobei sich diese linearen Anschlusselemente quer zur Förderrichtung und bevorzugt senkrecht zur Förderrichtung bzw. zum ersten Antriebsstrang erstrecken. Zweckmäßigerweise sind die Anschlusselemente in Förderrichtung mit Abstand zueinander verteilt angeordnet. - Es liegt fernerhin im Rahmen der Erfindung, dass die Längen L, l_{Z} und l_{F} quer bzw. senkrecht zur Förderrichtung bzw. in Richtung der Längssachse des Formkörpers gemessen werden.

Nach besonders bevorzugter Ausführungsform der Erfindung ist die Behandlungsstation als Behandlungskammer bzw. als thermische Behandlungskammer ausgebildet, in die die Formkörper zur thermischen Behandlung eingeführt werden. Gemäß besonders empfohlener Ausführungsform ist die Behandlungskammer als thermische Aushärtkammer zum Aushärten der Formkörper bzw. der Formkörperoberflächen ausgebildet. Weiterhin liegt es im Rahmen der Erfindung, dass die Formkörper in der thermischen Behandlungskammer bei erhöhter Temperatur behandelt werden, so dass insbesondere die Oberflächen bzw. Oberflächenbereiche der Formkörper aushärten können. Zweckmäßigerweise ist die thermische Behandlungskammer Bestandteil eines Durchlaufofens. Gemäß einer Ausführungsvariante der Erfindung kann die Behandlungsstation auch zumindest eine Beschichtungsstation, beispielsweise eine Lackierungsstation aufweisen bzw. als Beschichtungsstation, beispielsweise als Lackierungsstation ausgebildet sein. Die Beschichtungsstation bzw. Lackierungsstation kann in den Behandlungsofen integriert sein bzw. dem Behandlungsofen nachgeschaltet sein. Es liegt im Rahmen der Erfindung, dass die Formkörper mittels der Antriebseinrichtung durch die Beschichtungsstation, beispielsweise durch die Lackierungsstation geführt werden.

Eine besonders bewährte Ausführungsform ist dadurch gekennzeichnet, dass es sich bei den Formkörpern um Wickelkörper handelt, die zumindest an der Formkörperoberfläche aufgewickelte, mit flüssigem Medium getränkte Fasern bzw. Faserstränge aufweisen, insbesondere mit flüssigem duroplastischem Kunststoff getränkte Fasern bzw. Faserstränge. Es liegt im Rahmen der Erfindung, dass in der Behandlungsstation bzw. in der thermischen Behandlungskammer ein Aushärten des flüssigen Mediums bzw. des flüssigen duroplastischen Kunststoffes stattfindet. Bei den gewickelten Fasern bzw. Fasersträngen handelt es sich vorzugsweise um Kohlefasern, Glasfasern, Aramidfasern und/oder Kunststofffasern. Grundsätzlich können aber auch andere Arten von Fasern eingesetzt werden. Gemäß einer Ausführungsvariante werden die getränkten Fasern bzw. die getränkten Faserstränge auf einem Formträger aus Kunststoff und/oder Metall aufgewickelt.

Erfindungsgemäß ist zumindest eine Rotationseinrichtung zum Rotieren der Formkörper um ihre Längssachse vorgesehen. Es liegt im Rahmen der Erfindung, dass zumindest ein Fixierungszapfen - vorzugsweise zumindest zwei bzw. beide Fixierungszapfen - über zumindest ein Drehlager angeschlossen ist/sind, bevorzugt in jeweils zumindest einem Drehlager gelagert ist/sind und dass zumindest ein bzw. zumindest der erste Fixierungszapfen über zumindest ein Drehlager an zumindest ein Anschlusselement des ersten Antriebsstranges angeschlossen ist. Die Drehlager ermöglichen die Rotation bzw. Drehung der Fixierungszapfen und der daran angeschlossenen Formkörper. Zweckmäßigerweise ist ein Fixierungszapfen über ein Drehlager an einen Antriebsstrang - vorzugsweise an den zweiten Antriebsstrang und empfohlenermaßen über ein nachfolgend noch beschriebenes Aufnahmeelement an diesen Antriebsstrang angeschlossen. Bevorzugt ist der andere Fixierungszapfen bzw. der erste Fixierungszapfen über ein Drehlager - zweckmäßigerweise mittels eines weiter unten noch beschriebenen Anschlusskörpers - an zumindest ein Anschlusselement des ersten Antriebsstranges angeschlossen. - Die empfohlenermaßen vorgesehene Rotation der Formkörper dient insbesondere der Vermeidung eines Abtropfens und der gleichmäßigen Verteilung des an der Formkörperoberfläche vorgesehenen flüssigen Mediums bzw. des dort vorgesehenen flüssigen Kunststoffes.

Erfindungsgemäß ist die Rotationseinrichtung in Form eines sich in Förderrichtung erstreckenden Rotationsstranges ausgebildet, wobei ein Fixierungszapfen zwecks Rotation des Formkörpers mit dem Rotationsstrang wechselwirkt. Bevorzugt ist der Rotationsstrang als Rotationskette und/oder als Rotationszahnstange ausgeführt und der der Rotationseinrichtung zugeordnete Fixierungszapfen kämmt mit zumindest einem an dem Fixierungszapfen befestigten Ritzel mit dem Rotationsstrang. Es empfiehlt sich, dass der Rotationsstrang ortsfest angeordnet ist. Grundsätzlich könnte der Rotationsstrang aber auch entgegen der Förderrichtung bzw. in Förderrichtung bewegbar sein.

Es liegt im Rahmen der Erfindung, dass jedem der beiden Enden bzw. Stirnenden der zu fördernden Formkörper zumindest ein bzw. ein Antriebsstrang zugeordnet ist. Fernerhin liegt es im Rahmen der Erfindung, dass der erste Fixierungszapfen eines Formkörpers - unabhängig von der Länge l_{F} des Formkörpers - an das zumindest eine Anschlusselement des ersten Antriebsstranges angeschlossen ist und dass der zweite Fixierungszapfen an den bzw. an einen zweiten Antriebsstrang angeschlossen ist.

Erfindungsgemäß ist der erste Fixierungszapfen über zumindest einen Anschlusskörper an zumindest ein Anschlusselement - vorzugsweise an zumindest zwei bzw. zwei Anschlusselemente des ersten Antriebsstranges angeschlossen. Dabei weist der Anschlusskörper zweckmäßigerweise zumindest ein Drehlager für den ersten Fixierungszapfen auf, so dass eine Rotation des Fixierungszapfens bzw. des Formkörpers sichergestellt ist. Erfindungsgemäß liegt der Anschlusskörper auf dem zumindest einen Anschlusselement - vorzugsweise auf zumindest zwei bzw. zwei Anschlusselementen - lediglich auf. Weiterhin ist der Anschlusskörper in Längsrichtung des ersten Fixierungszapfens verschiebbar ist und bevorzugt in verschiedenen längs des Fixierungszapfens angeordneten Positionen befestigbar ist. Bei der hier beschriebenen Anschlussseite der erfindungsgemäßen Vorrichtung handelt es sich gleichsam um eine Loslager-Seite, wohingegen die gegenüberliegende Seite des Formkörpers zweckmäßigerweise als Festlager-Seite ausgebildet ist. Auf der Festlager-Seite sind bevorzugt weiter unten noch beschriebene Aufnahmeelemente für ein Drehlager des zweiten Fixierungszapfens an dem zweiten Antriebsstrang befestigt (Festlager).

Es liegt im Rahmen der Erfindung, dass die Anschlusselemente als sich linear und quer zur Förderrichtung erstreckende Anschlusselemente ausgebildet sind. - Vorzugsweise sind die Anschlusselemente als Anschlussstangen bzw. empfohlenermaßen als sich quer und bevorzugt senkrecht zur Förderrichtung erstreckende Anschlussstangen ausgeführt. Es liegt weiterhin im Rahmen der Erfindung, dass die Anschlusselemente bzw. die Anschlussstangen in Förderrichtung mit Abstand zueinander angeordnet sind und bevorzugt parallel bzw. im Wesentlichen parallel zueinander orientiert sind. Es empfiehlt sich, dass der gegenseitige Abstand der Anschlusselemente bzw. der Anschlussstangen in Förderrichtung so eingerichtet ist, dass der an dem ersten Fixierungszapfen vorgesehene Anschlusskörper auf zumindest zwei bzw. zwei Anschlusselementen bzw. Anschlussstangen zur Auflage kommt. Grundsätzlich kann der Formkörper bzw. der Anschlusskörper aber auch auf lediglich einem Anschlusselement bzw. einer Anschlussstange aufliegen. Dabei kann das Anschlusselement bzw. die Anschlussstange beispielsweise als nach oben hin offene U-förmige Anschlussstange ausgebildet sein. - Vorzugsweise liegt der Anschlusskörper lediglich auf den Anschlusselementen bzw. Anschlussstangen auf und es sind keine weiteren Befestigungsmaßnahmen zur Fixierung des Anschlusskörpers an den Anschlusselementen vorgesehen.

Gemäß einer Ausführungsform der Erfindung ist die Ausdehnung des Anschlusskörpers quer zu den Anschlusselementen größer bzw. deutlich größer als die Ausdehnung des Anschlusskörpers in Längsrichtung der Anschlusselemente bzw. der Anschlussstangen. Zweckmäßigerweise ist diese Ausdehnung quer zu den Anschlusselementen bzw. Anschlussstangen mindestens zweimal, vorzugsweise mindestens dreimal und bevorzugt mindestens viermal größer als die Ausdehnung des Anschlusskörpers in Längsrichtung der Anschlusselemente bzw. Anschlussstangen. Erfindungsgemäß ist ein Anschlusskörper als scheibenförmiger bzw. plattenförmiger Anschlusskörper ausgebildet. Dabei ist die Ausdehnung des scheibenförmigen bzw. plattenförmigen Anschlusskörpers quer zu den Anschlusselementen bzw. Anschlussstangen vorzugsweise so bemessen, dass der Anschlusskörper auf einem Anschlusselement oder bevorzugt auf zwei Anschlusselementen bzw. Anschlussstangen zur Auflage kommt. Die Auflage des Anschlusskörpers erfolgt dabei zweckmäßigerweise mit seinem Scheibenrand bzw. Plattenrand auf den Anschlusselementen bzw. Anschlussstangen. Nach einer Ausführungsvariante ist ein scheibenförmiger bzw. plattenförmiger Anschlusskörper in der Draufsicht rund, vorzugsweise kreisrund oder oval ausgebildet. Grundsätzlich sind aber auch andere Ausgestaltungen des Anschlusskörpers möglich. Bei runder Ausbildung eines scheibenförmigen bzw. plattenförmigen Anschlusskörpers ragt zweckmäßigerweise ein Teil des Anschlusskörpers zwischen zwei Anschlusselementen bzw. Anschlussstangen hindurch bzw. nach unten hindurch. - Es liegt weiterhin im Rahmen der Erfindung, dass ein Drehlager für den ersten Fixierungszapfen in der Mitte bzw. etwa in der Mitte eines scheibenförmigen bzw. plattenförmigen Anschlusskörpers angeordnet ist, so dass der erste Fixierungszapfen durch die Mitte bzw. in etwa durch die Mitte des scheibenförmigen bzw. plattenförmigen Anschlusskörpers durchgreift.

Bevorzugt beträgt die Dicke d des Anschlusskörpers quer zur Förderrichtung bzw. in Längsrichtung eines Anschlusselementes maximal 25 %, bevorzugt maximal 20 % und sehr bevorzugt maximal 15 % sowie besonders bevorzugt maximal 10 % der Länge L der Anschlusselemente bzw. der Anschlussstangen.

Es liegt im Rahmen der Erfindung, dass der zweite Fixierungszapfen eines Formkörpers in bzw. auf zumindest einem bzw. einem an dem zweiten Antriebsstrang fixierten Aufnahmeelement aufgenommen ist. Dabei ist der zweite Fixierungszapfen vorzugsweise über zumindest ein Drehlager an bzw. in einem Aufnahmeelement aufgenommen. Zweckmäßigerweise ist eine Mehrzahl von Aufnahmeelementen längs des zweiten Antriebsstranges positioniert und bevorzugt jeweils an dem zweiten Antriebsstrang fixiert. Die Aufnahmeelemente sind also nach empfohlener Ausführungsform der Erfindung fest an dem zweiten Antriebsstrang angeordnet (Festlager). Eine besonders empfohlene Ausführungsform ist dadurch gekennzeichnet, dass die Aufnahmeelemente als Aufnahmeschalen ausgebildet sind und dass ein den zweiten Fixierungszapfen aufnehmendes Drehlager in einer solchen Aufnahmeschale aufgenommen ist.

Es liegt im Rahmen der Erfindung, dass zumindest ein Antriebsstrang der erfindungsgemäßen Vorrichtung als umlaufender Endlos-Antriebsstrang ausgeführt ist und dass besonders bevorzugt alle Antriebsstränge als umlaufende Endlos-Antriebsstränge ausgebildet sind. Gemäß empfohlener Ausführungsform ist zumindest ein Antriebsstrang und vorzugsweise sind zumindest zwei Antriebsstränge der Vorrichtung als Antriebskette(n) ausgebildet. Eine solche Antriebskette ist dabei zweckmäßigerweise als umlaufende Endloskette ausgeführt. Es liegt im Rahmen der Erfindung, dass eine Antriebskette Kettenglieder bzw. Kettenlaschen aufweist, die über Kettenbolzen bzw. Kettenrollen miteinander verbunden sind. Zweckmäßigerweise wird eine Antriebskette jeweils mittels zumindest eines Ritzels oder dergleichen angetrieben.

Nach einer ersten bevorzugten Ausführungsform der Erfindung verbinden die Anschlusselemente den auf der einen Seite des Formkörpers angeordneten ersten Antriebsstrang - vorzugsweise die erste Antriebskette - mit einem auf der anderen Seite des Formkörpers angeordneten zweiten Antriebsstrang - vorzugsweise mit der zweiten Antriebskette. Dabei sind die Anschlusselemente bevorzugt als Anschlussstangen ausgebildet. Bei dieser ersten Ausführungsform der Erfindung erstrecken sich die Anschlusselemente somit über die gesamte Länge der Formkörper. Es empfiehlt sich, dass die Anschlusselemente bzw. die Anschlussstangen in Förderrichtung mit Abstand zueinander angeordnet sind. Zweckmäßigerweise sind die durch die Anschlusselemente bzw. Anschlussstangen verbundenen beiden Antriebsstränge parallel bzw. im Wesentlichen parallel zueinander angeordnet. Gemäß einer empfohlenen Ausführungsform sind die Anschlusselemente bzw. Anschlussstangen dieser Ausführungsvariante als verlängerte Kettenbolzen bzw. Kettenrollen der Antriebsketten ausgebildet, die diese beiden Antriebsketten miteinander verbinden. Zweckmäßigerweise werden die Anschlusselemente bzw. Anschlussstangen von den daran angeschlossenen und synchron bewegten Antriebssträngen bzw. Antriebsketten in Förderrichtung bewegt. - Bei dieser ersten Ausführungsform der Erfindung ist die Länge L zumindest eines Teils der Anschlusselemente - vorzugsweise aller Anschlusselemente - größer als die Länge l_{Z} des Zapfenabschnittes des ersten Fixierungszapfens zwischen dem Formkörper und dem ersten Antriebsstrang. Vorzugsweise beträgt diese Länge L der Anschlusselemente bzw. Anschlussstangen mindestens das 1,5-fache, bevorzugt mindestens das 2-fache und besonders bevorzugt mindestens das 2,5-fache der Länge l_{Z} des Zapfenabschnittes des ersten Fixierungszapfens zwischen dem Formkörper und dem ersten Antriebsstrang. Weiterhin ist bei dieser ersten Ausführungsform der Erfindung die Länge L der Anschlusselemente bzw. Anschlussstangen empfohlenermaßen größer als die Länge l_{F} des Formkörpers und beträgt vorzugsweise zumindest das 1,2-fache, bevorzugt zumindest das 1,3-fache und besonders bevorzugt zumindest das 1,5-fache der Länge l_{F} des Formkörpers. Es empfiehlt sich fernerhin, dass die Länge L der Anschlusselemente bzw. Anschlussstangen bei dieser ersten Ausführungsform der Erfindung zumindest 150 mm, bevorzugt zumindest 200 mm und besonders bevorzugt zumindest 250 mm beträgt. Eine besondere Ausführungsform der Erfindung zeichnet sich dadurch aus, dass die Länge L der Anschlusselemente bzw. Anschlussstangen 150 mm bis 1000 mm, empfohlenermaßen 150 mm bis 750 mm und sehr bevorzugt 150 mm bis 500 mm beträgt.

Eine zweite Ausführungsform der Erfindung ist dadurch gekennzeichnet, dass auf der einen Seite der Formkörper neben dem ersten Antriebsstrang - vorzugsweise neben der ersten Antriebskette - ein weiterer bzw. ein dritter Antriebsstrang - vorzugsweise eine weitere bzw. dritte Antriebskette - angeordnet ist und sich in Förderrichtung erstreckt. Es liegt dabei im Rahmen der Erfindung, dass der erste Antriebsstrang und der weitere bzw. dritte Antriebsstrang durch die Anschlusselemente - bevorzugt in Form von Anschlussstangen - miteinander verbunden sind. Weiterhin liegt es im Rahmen der Erfindung, dass der erste Antriebsstrang und der weitere bzw. der dritte Antriebsstrang parallel bzw. im Wesentlichen parallel zueinander angeordnet sind. Nach einer Ausführungsvariante der Erfindung sind die beiden Antriebsstränge als Antriebsketten ausgebildet und empfohlenermaßen sind diese beiden Antriebsketten durch ihre gleichsam verlängerten Kettenbolzen bzw. Kettenrollen miteinander verbunden. Prinzipiell kann das Aggregat aus dem ersten und dem dritten Antriebsstrang auf der gleichen Höhe wie der zweite Antriebsstrang angeordnet sein. Nach einer Ausführungsvariante der Erfindung kann das Aggregat aber auch bezüglich des zweiten Antriebsstranges auf unterschiedlicher Höhe bzw. auf unterschiedlicher vertikaler Höhe angeordnet sein. Es liegt im Rahmen der Erfindung, dass bei dieser zweiten Ausführungsform die Länge L der den ersten und den dritten Antriebsstrang miteinander verbindenden Anschlusselemente bzw.

Anschlussstangen geringer ist als die Länge l_{Z} des zwischen Formkörper und dem ersten Antriebsstrang angeordneten Zapfenabschnittes des ersten Fixierungszapfens. Die Länge l_{Z} dieses Zapfenabschnittes wird dabei zwischen dem Formkörper bzw. dem Ende des Formkörpers und dem als äußerer Antriebsstrang ausgeführten ersten Antriebsstrang gemessen. Zweckmäßigerweise beträgt die Länge L zumindest 35 %, bevorzugt zumindest 40 % und nach einer Ausführungsvariante zumindest 50 % der Länge l_{Z} des genannten Zapfenabschnittes.

Eine dritte bevorzugte Ausführungsform der Erfindung ist dadurch gekennzeichnet, dass der erste Antriebsstrang - vorzugsweise die erste Antriebskette - zumindest zwei bzw. zwei sich in Förderrichtung erstreckende Teil-Antriebsstränge - bevorzugt Teil-Antriebsketten - aufweist und wobei die beiden Teil-Antriebsstränge über die Anschlusselemente - vorzugsweise in Form von Anschlussstangen - miteinander verbunden sind bzw. aneinander fixiert sind. Dabei liegt es im Rahmen der Erfindung, dass ein Teil-Antriebsstrang bzw. eine Teil-Antriebskette durch hintereinander angeordnete Kettenglieder bzw. Kettenlaschen der einen Seite der Antriebskette gebildet wird und der andere Teil-Antriebsstrang durch hintereinander angeordnete Kettenglieder bzw. Kettenlaschen der zweiten Seite der Antriebskette gebildet wird und dass die beiden Teil-Antriebsketten über die Kettenbolzen bzw. Kettenrollen der Antriebskette miteinander verbunden sind. Hier bilden also die Kettenbolzen bzw. Kettenrollen die Anschlusselemente bzw. Anschlussstangen. Das Aggregat aus den beiden über die Anschlusselemente miteinander verbundenen Teil-Antriebssträngen kann auf gleicher Höhe angeordnet sein wie der zweite Antriebsstrang. Grundsätzlich kann der zweite Antriebsstrang aber auch auf einer unterschiedlichen Höhe bzw. auf einer unterschiedlichen vertikalen Höhe positioniert sein. Die Länge L der Anschlusselemente bzw. der als Kettenbolzen/Kettenrollen ausgebildeten Anschlusselemente beträgt vorzugsweise das 0,8-fache bis 4-fache der Länge l_{Z} des Zapfenabschnittes des ersten Fixierungszapfens zwischen Formkörper und erstem Antriebsstrang. Empfohlenermaßen beträgt die Länge L der Anschlusselemente zumindest 10 %, bevorzugt zumindest 15 % und sehr bevorzugt zumindest 20 % der Länge l_{F} des Formkörpers.

Es liegt im Rahmen der Erfindung, dass die Fixierungszapfen bzw. die beiden Fixierungszapfen drehfest an dem Formkörper fixiert sind und vorzugsweise jeweils in dem Formkörper eingeschraubt sind. Dabei können die Fixierungszapfen mit der Längssachse des Formkörpers fluchten. Ein Fluchten der Fixierungszapfen miteinander und/oder mit der Längsachse der Formkörper ist aber im Rahmen der erfindungsgemäßen Ausgestaltung nicht zwingend erforderlich.

Der Erfindung liegt die Erkenntnis zugrunde, dass mit der erfindungsgemäßen Formkörper-Behandlungsvorrichtung Formkörper unterschiedlicher Länge bzw. unterschiedlicher Größe auf einfache und wenig aufwendige Weise behandelt werden können und insbesondere in einer Aushärtungskammer ausgehärtet werden können. Dabei kann die Vorrichtung zügig und einfach mit verschiedenen Formkörpern unterschiedlicher Ausmaße betrieben werden und aufwendige Verstellmaßnahmen bzw. Austauschmaßnahmen für Komponenten sind im Vergleich zum Stand der Technik nicht erforderlich. Es können grundsätzlich die gleichen Fixierungszapfen für Formkörper unterschiedlicher Länge eingesetzt werden bzw. in den Formkörpern fixiert werden. Nichtsdestoweniger können die unterschiedlichen Formkörper funktionssicher und präzise in die Behandlungsstation eingeführt bzw. durch die Behandlungsstation gefördert werden. Es ist auch zu betonen, dass die erfindungsgemäße Vorrichtung mit einfachen und kostengünstigen Mitteln realisiert werden kann und dass die Vorrichtung insgesamt wenig komplex aufgebaut ist. Somit sind auch Wartungs- und Reparaturmaßnahmen einfach und wenig aufwendig möglich. Nachfolgend wird die Erfindung anhand einer lediglich ein Ausführungsbeispiel darstellenden Zeichnung näher erläutert. Es zeigen in schematischer Darstellung:

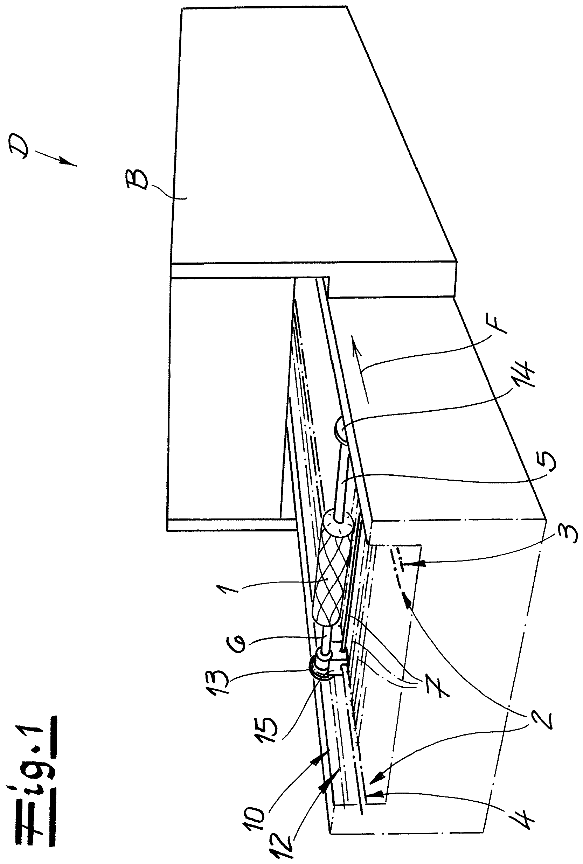

- **Fig. 1**: eine perspektivische Darstellung einer erfindungsgemäßen Formkörper-Behandlungsvorrichtung,
- **Fig. 2**: einen Schnitt durch eine erste Ausführungsform des Gegenstandes nach Fig. 1,
- **Fig. 3a, 3b**: einen Schnitt aus der Fig. 2 ausschnittsweise
- **Fig. 4**: den Gegenstand gemäß Fig. 2 in einer zweiten Ausführungsform,
- **Fig. 5**: den Gegenstand nach Fig. 2 in einer dritten Ausführungsform,
- **Fig. 6**: einen Ausschnitt aus Fig. 5 und
- **Fig. 7**: einen Ausschnitt aus Fig. 5 in einer anderen Ausführungsvariante.

Die Figuren zeigen eine erfindungsgemäße Formkörper-Behandlungsvorrichtung mit zumindest einer Behandlungsstation in die Formkörper 1 zur Behandlung mittels einer Antriebseinrichtung 2 einführbar sind. Im Ausführungsbeispiel nach den Figuren werden die Formkörper 1 durch eine thermische Behandlungskammer B eines Durchlaufofens D geführt bzw. gefördert. Bei den Formkörpern 1 handelt es sich um Wickelkörper, die an ihrer Wickelkörperoberfläche aufgewickelte, mit flüssigem duroplastischem Kunststoff getränkte Faserstränge aufweisen. In der thermischen Behandlungskammer B werden diese Formkörper 1 bzw. Wickelkörper einer erhöhten Temperatur ausgesetzt, so dass ein Aushärten der Formkörper 1 bzw. der Oberflächen der Formkörper 1 stattfindet. Bei den Wickelkörpern handelt es sich um relativ empfindliche Formkörper 1, so dass hier die Förderung und das Aushärten funktionssicher und präzise durchgeführt werden müssen.

Die Antriebseinrichtung 2 zur Förderung der Formkörper 1 durch die thermische Behandlungskammer B weist in allen Ausführungsbeispielen der Figuren zwei bzw. zumindest zwei sich in Förderrichtung F der Formkörper 1 erstreckende Antriebsstränge 3, 4, auf die im Ausführungsbeispiel als Antriebsketten ausgebildet sind. Mit diesen als Antriebsketten ausgeführten Antriebssträngen 3, 4 sind die Formkörper 1 in Förderrichtung F durch die thermische Behandlungskammer B des Durchlaufofens D bewegbar. An jeden zu fördernden Formkörper 1 sind zwei Fixierungszapfen 5, 6 angeschlossen, die im Ausführungsbeispiel drehfest in den Formkörper 1 eingeschraubt sind. Diese Fixierungszapfen 5, 6 der Formkörper 1 sind jeweils an eine Antriebskette bzw. an einen Antriebsstrang 3, 4 angeschlossen, so dass der zugeordnete Formkörper 1 mittels der synchron bewegten Antriebsstränge 3, 4 in Förderrichtung F gefördert werden kann. Erfindungsgemäß weist der erste Antriebsstrang 3 bzw. die erste Antriebskette eine Mehrzahl von sich quer - im Ausführungsbeispiel senkrecht - zur Förderrichtung F erstreckenden Anschlusselementen 7 auf. Der dem ersten Antriebsstrang 3 zugeordnete erste Fixierungszapfen 5 ist im Ausführungsbeispiel jeweils an zwei Anschlusselementen 7 des ersten Antriebsstranges 3 angeschlossen. Die Anschlusselemente 7 sind bevorzugt und im Ausführungsbeispiel als sich quer bzw. senkrecht zur Förderrichtung F erstreckende Anschlussstangen ausgebildet.

Es liegt im Rahmen der Erfindung, dass die Länge L der Anschlusselemente 7 zumindest 20 % der Länge l_{Z} des Zapfenabschnittes des ersten Fixierungszapfens 5 entspricht, welcher Zapfenabschnitt sich zwischen dem Formkörper 1 bzw. dem den ersten Antriebsstrang 3 zugewandten Ende des Formkörpers 1 und dem ersten Antriebsstrang 3 erstreckt und/oder diese Länge L entspricht zumindest 10 %, bevorzugt zumindest 15 % der Länge l_{F} des Formkörpers 1 und/oder die Länge L beträgt zumindest 30 mm, vorzugsweise zumindest 35 mm.

Es liegt im Rahmen der Erfindung, dass die Formkörper 1 rotierend durch die thermische Behandlungskammer B des Durchlaufofens D geführt werden. Dadurch soll einerseits ein Abtropfen des flüssigen duroplastischen Kunststoffes vermieden werden und andererseits eine gleichmäßige Verteilung dieses flüssigen Kunststoffes erzielt werden. Zu diesem Zweck weist die erfindungsgemäße Vorrichtung vorzugsweise eine Rotationseinrichtung 10 zum Rotieren der Formkörper 1 um ihre Längsachse auf. Dazu sind die beiden Fixierungszapfen 5, 6 jeweils in einem Drehlager 11 gelagert. Der erste Fixierungszapfen 5 ist zweckmäßigerweise und im Ausführungsbeispiel über ein solches Drehlager 11 an die Anschlusselemente 7 angeschlossen. Gemäß empfohlener Ausführungsform und im Ausführungsbeispiel ist die Rotationseinrichtung 10 in Form eines sich in Förderrichtung F erstreckenden Rotationsstranges 12 ausgebildet, wobei dieser Rotationsstrang 12 bevorzugt und im Ausführungsbeispiel als Rotationskette ausgeführt ist. Vorzugsweise und im Ausführungsbeispiel findet zwecks Rotation des Formkörpers 1 eine Wechselwirkung zwischen dem zweiten Fixierungszapfen 6 und der Rotationskette statt, wobei der zweite Fixierungszapfen 6 mit einem an diesem Fixierungszapfen 6 befestigten Ritzel 13 mit der Rotationskette kämmt. Bevorzugt und im Ausführungsbeispiel ist der Rotationsstrang 12 bzw. die Rotationskette ortsfest ausgebildet und bewegt sich somit nicht in oder entgegen der Förderrichtung F.

Die Figuren zeigen, dass jedem der beiden Enden der Formkörper 1 ein Antriebsstrang 3, 4 zugeordnet ist bzw. gegenüberliegt. Wie oben bereits dargelegt, ist im Ausführungsbeispiel der erste Fixierungszapfen 5 eines Formkörpers 1 an die Anschlusselemente 7 der ersten Antriebskette bzw. des ersten Antriebsstranges 3 angeschlossen. Der zweite Fixierungszapfen 6 des Formkörpers 1 ist im Ausführungsbeispiel an die zweite Antriebskette bzw. an den zweiten Antriebsstrang 4 angeschlossen. - Empfohlenermaßen und im Ausführungsbeispiel ist der erste Fixierungszapfen 5 mittels eines ein Drehlager 11 für den ersten Fixierungszapfen 5 aufweisenden Anschlusskörpers 14 an die Anschlusselemente 7 bzw. an die Anschlussstangen des ersten Antriebsstranges 3 angeschlossen. Bevorzugt und im Ausführungsbeispiel liegt der Anschlusskörper 14 auf zwei Anschlussstangen lediglich auf. Der Anschlusskörper 14 mit dem ersten Fixierungszapfen 5 und dem daran angeschlossenen Formkörper 1 ist also grundsätzlich quer zur Förderrichtung F verschiebbar. Insoweit handelt es sich bei dieser Anschlussseite des Formkörpers 1 gleichsam um die Loslager-Seite.

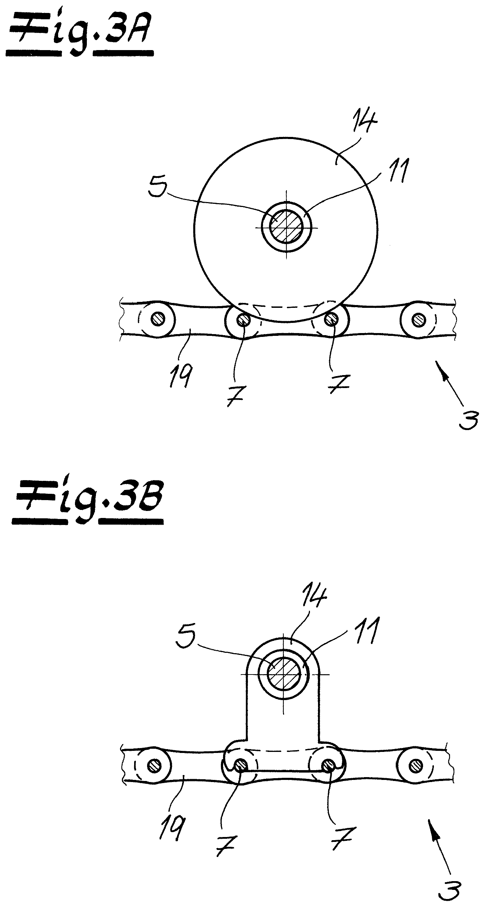

Vorzugsweise und im Ausführungsbeispiel ist der Anschlusskörper 14 als scheibenförmiger Anschlusskörper 14 ausgebildet und somit ist seine Ausdehnung quer zu den Anschlussstangen deutlich größer als in Längsrichtung der Anschlussstangen. Im Ausführungsbeispiel liegt der scheibenförmige Anschlusskörper 14 mit seinem Scheibenrand auf zwei Anschlussstangen bzw. Anschlusselementen 7 auf. Die Fig. 3a zeigt eine Ausführungsvariante des scheibenförmigen Anschlusskörpers 14. Hier ist dieser scheibenförmige Anschlusskörper 14 kreisrund ausgebildet. Die Fig. 3b zeigt eine andere Ausführungsform für den scheibenförmigen Anschlusskörper 14. In beiden Fällen ist das Drehlager 11 in dem scheibenförmigen Anschlusskörper 14 angeordnet und der erste Fixierungszapfen 5 durchgreift dieses Drehlager, so dass der erste Fixierungszapfen 5 bzw. der daran angeschlossene Formkörper 1 relativ zu dem Anschlusskörper 14 drehbar ist.

Zweckmäßigerweise und im Ausführungsbeispiel ist der zweite Fixierungszapfen 6 eines Formkörpers 1 mittels eines Drehlagers 11 auf einem an der zweiten Antriebskette bzw. dem zweiten Antriebsstrang 4 fixierten Aufnahmeelement 15 aufgenommen. Ein solches Aufnahmeelement 15 ist im Ausführungsbeispiel als Aufnahmeschale ausgebildet. Eine Mehrzahl von solchen Aufnahmeelementen 15 bzw. Aufnahmeschalen ist längs der zweiten Antriebskette positioniert und jeweils an dieser zweiten Antriebskette bzw. an dem zweiten Antriebsstrang 4 fixiert. Insoweit handelt es sich bei dieser Anschlussseite der Formkörper 1 gleichsam um die Festlager-Seite.

Empfohlenermaßen und im Ausführungsbeispiel sind die Antriebsstränge 3, 4 als umlaufende Endlos-Antriebsketten ausgebildet. Es liegt im Rahmen der Erfindung, dass bei den Antriebsketten in an sich üblicher Weise Kettenglieder 19 bzw. Kettenlaschen über Kettenbolzen 20 bzw. Kettenrollen miteinander verbunden sind. Die Endlos-Antriebsketten werden zweckmäßigerweise über ein Ritzel oder dergleichen angetrieben.

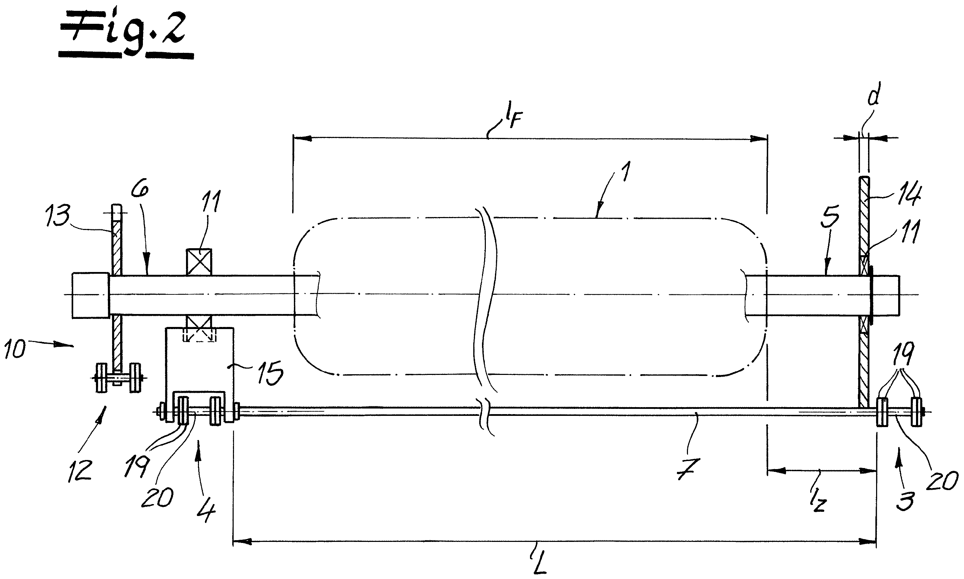

Die Fig. 2 zeigt eine erste Ausführungsform der erfindungsgemäßen Vorrichtung. Hier verbinden die als Anschlussstangen ausgebildeten Anschlusselemente 7 die erste Antriebskette bzw. den ersten Antriebsstrang 3 mit der zweiten Antriebskette bzw. mit dem zweiten Antriebsstrang 4. Somit erstrecken sich die Anschlusselemente 7 bzw. die Anschlussstangen über den gesamten Abstand zwischen den beiden Antriebssträngen 3, 4 und somit auch über die gesamte Länge l_{F} des Formkörpers 1. Die Anschlussstangen sind dabei mit Abstand zueinander in Förderrichtung F hintereinander angeordnet. Bei dieser Ausführungsform können die Anschlusselemente 7 bzw. Anschlussstangen als verlängerte Kettenbolzen der beiden Antriebsketten bzw. Antriebsstränge 3, 4 ausgebildet sein. Es liegt im Rahmen der Erfindung, dass die Anschlusselemente 7 bzw. die Anschlussstangen mit den beiden synchron in Förderrichtung F bewegten Antriebsketten in Förderrichtung F bewegt werden. In Fig. 2 ist erkennbar, dass bei dieser Ausführungsform die Länge L der Anschlusselemente 7 bzw. Anschlussstangen bevorzugt größer bzw. deutlicher größer ist als die Länge l_{Z} des Zapfenabschnittes des ersten Fixierungszapfens 5 zwischen dem Formkörper 1 und dem ersten Antriebsstrang 3. Vorzugsweise ist dieser Länge L mindestens doppelt so groß wie die Länge l_{Z} des Zapfenabschnittes des ersten Fixierungszapfens. Die Länge L der Anschlusselemente 7 wird im Übrigen hier und nachfolgend zweckmäßigerweise zwischen den inneren Gliedern bzw. Kettengliedern der beteiligten Antriebsstränge 3, 4, 16 gemessen. Das wird aus den Fig. 2, 4 und 5 deutlich.

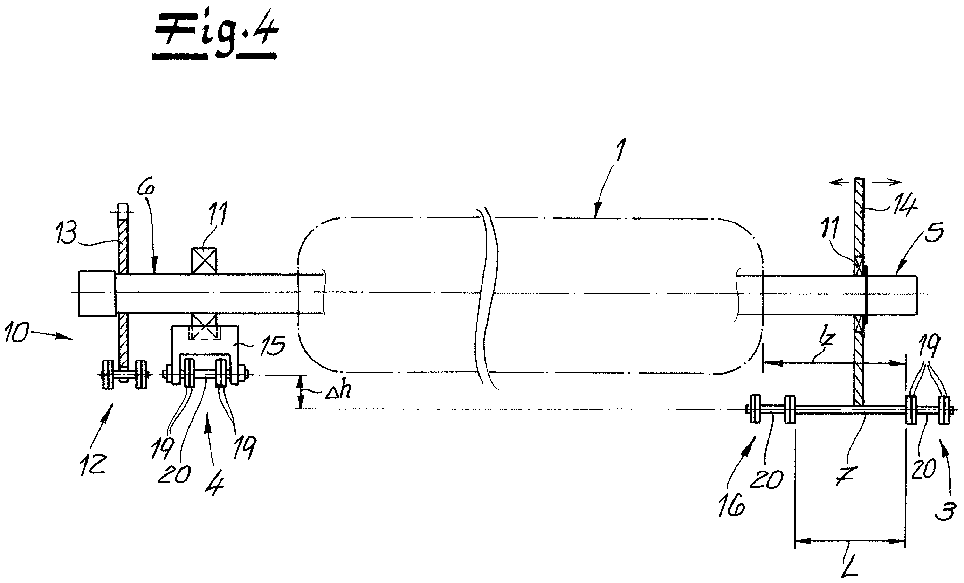

Die Fig. 4 zeigt eine zweite Ausführungsform der erfindungsgemäßen Vorrichtung. Hier ist auf der einen Seite der Formkörper 1 neben der ersten Antriebskette bzw. neben dem ersten Antriebsstrang 3 ein weiterer bzw. dritter Antriebsstrang 16 angeordnet, der vorzugsweise ebenfalls als weitere bzw. dritte Antriebskette ausgebildet ist und sich in Förderrichtung F erstreckt. Es liegt dabei im Rahmen der Erfindung, dass der erste Antriebsstrang 3 und dieser weitere bzw. dritte Antriebsstrang 16 über die Anschlusselemente 7 - bevorzugt und im Ausführungsbeispiel in Form von Anschlussstangen - miteinander verbunden sind. Dabei erstrecken sich der erste Antriebsstrang 3 und der dritte Antriebsstrang 16 parallel zueinander in Förderrichtung F und werden synchron in Förderrichtung F bewegt. Die die beiden Antriebsstränge 3 und 16 verbindenden Anschlusselemente 7 können als verlängerte Kettenbolzen 20 der beiden als Antriebsketten ausgebildeten Antriebsstränge 3, 16 ausgeführt sein. Im Ausführungsbeispiel der Fig. 4 ist erkennbar, dass der zweite Antriebsstrang 4 im Vergleich zu dem Aggregat aus dem ersten Antriebsstrang 3 und dem dritten Antriebsstrang 16 auf unterschiedlicher vertikaler Höhe angeordnet ist, so dass sich eine Höhendifferenz Δh ergibt. In der Fig. 4 ist im Übrigen erkennbar, dass es im Rahmen der Erfindung liegt, dass bei dieser Ausführungsform die Länge L der Anschlusselemente 7 geringer ist als die Länge l_{Z} des Zapfenabschnittes des ersten Fixierungszapfens 5. Grundsätzlich sind aber auch Varianten denkbar, bei denen auch bei dieser zweiten Ausführungsform die Länge L gleich oder größer ist als die Länge l_{Z} des Zapfenabschnittes des ersten Fixierungszapfens 5.

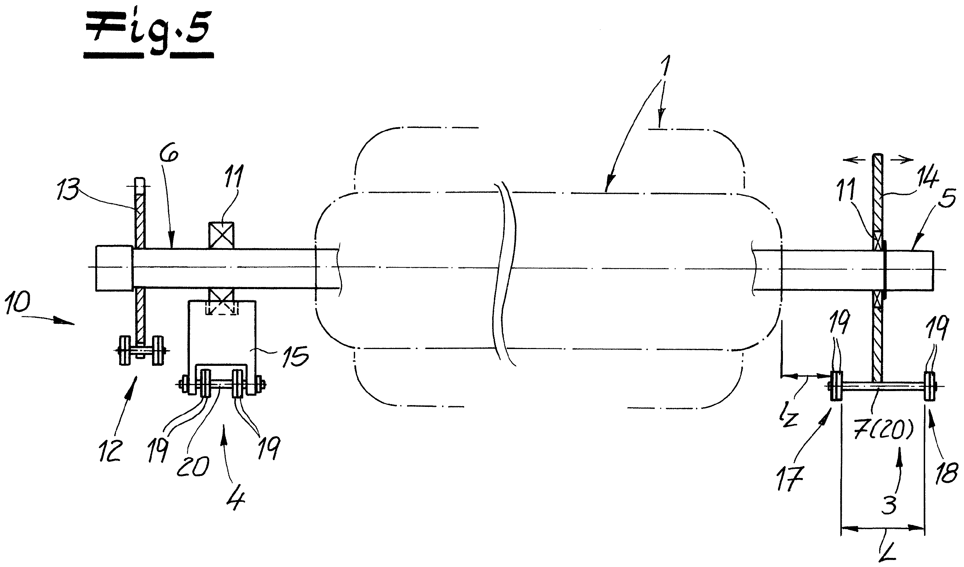

Die Fig. 5 zeigt eine dritte Ausführungsform der erfindungsgemäßen Vorrichtung. Hier ist der erste Antriebsstrang 3 bzw. die erste Antriebskette aus zwei sich in Förderrichtung F erstreckenden Teil-Antriebssträngen 17, 18 zusammengesetzt, wobei diese Teil-Antriebsstränge 17, 18 über die Anschlusselemente 7 miteinander verbunden sind. Bei den Teil-Anschlusssträngen 17, 18 handelt es sich im Ausführungsbeispiel um jeweils die linke und die rechte Reihe von hintereinander angeordneten Kettengliedern 19 der ersten Antriebskette und die Anschlusselemente 7 sind als verlängerte Kettenbolzen 20 dieser verbreiterten ersten Antriebsketten ausgeführt. Somit meint der Begriff Anschlusselemente 7 in Bezug auf diese Ausführungsform gemäß Fig. 5 auch verlängerte Kettenverbindungselemente bzw. Kettenbolzen 20 einer verbreiterten ersten Antriebskette bzw. eines verbreiterten ersten Antriebsstranges 3.

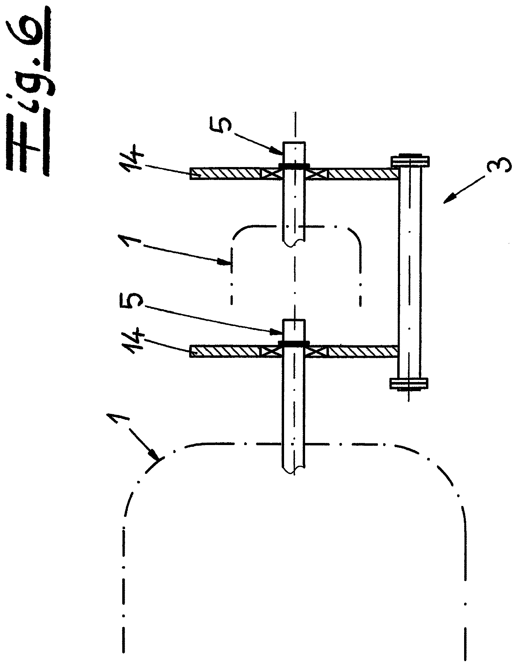

In der Fig. 6 ist die rechte Seite des Gegenstandes aus der Fig. 5 als Ausschnitt dargestellt. Hier ist gezeigt, dass bei dieser Ausführungsform zwei Formkörper 1 mit sehr unterschiedlichem Durchmesser und sehr unterschiedlicher Länge l_{F} mit dem gleichen ersten Fixierungszapfen 5 und dem gleichen Anschlusskörper 14 in der erfindungsgemäßen Vorrichtung geführt bzw. transportiert werden können. Voraussetzung dafür ist lediglich, dass der Durchmesser des scheibenförmigen Anschlusskörpers 14 größer ist als der Durchmesser des bis in den Bereich des ersten Antriebsstranges 3 ragenden Formkörpers 1 mit geringerem Durchmesser. Somit ist es problemlos möglich unterschiedlich große Formkörper mit dem gleichen relativ kleinen Anschlusskörper 14 anzuschließen. Der kürzere Formkörper mit größerem Durchmesser kann im Ausführungsbeispiel gemäß Fig. 6 in den Bereich unterhalb des ersten Antriebsstranges 3 gleichsam eintauchen. Diese Vorteile können im Übrigen auch bei der Ausführungsform der erfindungsgemäßen Vorrichtung nach Fig. 4 erreicht werden.

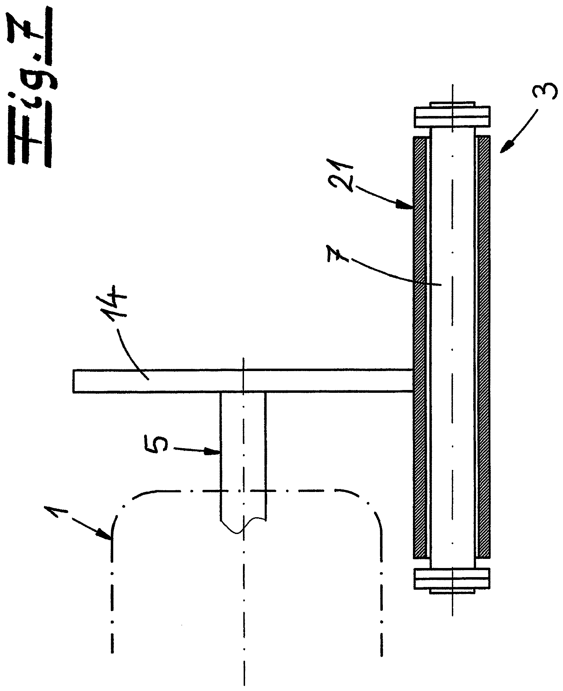

In der Fig. 7 ist ebenfalls die rechte Seite der Fig. 5 als Ausschnitt dargestellt und zwar in einer anderen Ausführungsvariante. Der erste Fixierungszapfen 5 ist hier drehfest mit dem Anschlusskörper 14 verbunden. Zur Gewährleistung einer Rotation des Aggregates aus Formkörper 1, Fixierungszapfen 5 und Anschlusskörper 14 kann der Anschlusskörper 14 über an dem ersten Antriebsstrang 3 angeordnete Rollen 21 gleichsam abrollen. Die Rollen 21 sind zweckmäßigerweise drehbar auf den Anschlusselementen 7 aufgebracht und es liegt im Rahmen der Erfindung, dass die Rollen 21 um die Längsachse der Anschlusselemente 7 rotieren können. Diese Ausführungsvariante kann also anstelle der Ausführungsvariante mit in dem Anschlusskörper 14 angeordnetem Drehlager 11 gewählt werden. Eine entsprechende Anordnung kann im Übrigen auch am zweiten Antriebsstrang 4 vorgesehen werden, so dass dann bevorzugt ein Drehlager 11 an dem Aufnahmeelement 15 entfallen kann und stattdessen an dem zweiten Antriebsstrang 4 Rollen 21 zum Abrollen des Aufnahmeelementes 15 vorgesehen sind.

## Patentansprüche

1. Formkörper-Behandlungsvorrichtung mit zumindest einer Behandlungsstation, in die Formkörper (1) zur Behandlung mittels einer Antriebseinrichtung (2) einführbar sind, wobei die Antriebseinrichtung (2) zumindest einen sich in Förderrichtung der Formkörper erstreckenden Antriebsstrang (3, 4) aufweist, wobei der Antriebsstrang (3, 4) - vorzugsweise zumindest zwei Antriebsstränge (3, 4) - in Förderrichtung der Formkörper (1) bewegbar ist/sind,
wobei zumindest zwei Fixierungszapfen (5, 6) vorgesehen sind, die an gegenüberliegenden Enden des Formkörpers (1) fixierbar sind bzw. fixiert sind, wobei zumindest ein Fixierungszapfen (5, 6) an einem Antriebsstrang (3, 4) angeschlossen ist - vorzugsweise zwei Fixierungszapfen (5, 6) jeweils an einem Antriebsstrang (3, 4) angeschlossen sind -, so dass der zugeordnete Formkörper (1) mittels des bewegten Antriebsstranges (3, 4) bzw. mittels der bewegten Antriebsstränge (3, 4) in Förderrichtung bewegbar ist,
wobei zumindest ein erster Antriebsstrang (3) eine Mehrzahl von sich quer zur Förderrichtung erstreckenden Anschlusselementen (7) aufweist, wobei der diesem ersten Antriebsstrang (3) zugeordnete erste Fixierungszapfen (5) an zumindest einem Anschlusselement (7) dieses ersten Antriebsstranges (3) angeschlossen ist bzw. anschließbar ist, wobei die Länge L zumindest eines Teils dieser Anschlusselemente (7), vorzugsweise aller Anschlusselemente (7)
- zumindest 30 % der Länge l_{Z} des Zapfenabschnittes des ersten Fixierungszapfens (5) entspricht, welcher Zapfenabschnitt (8) sich zwischen dem Formkörper (1) bzw. dem ersten Antriebsstrang (3) zugewandten Ende des Formkörper (1) und dem ersten Antriebsstrang (3) erstreckt
und/oder
- zumindest 30 mm, vorzugsweise zumindest 35 mm und bevorzugt zumindest 50 mm beträgt,
wobei zumindest eine Rotationseinrichtung (10) zum Rotieren der Formkörper (1) um ihre Längsachse vorgesehen ist, wobei die Rotationseinrichtung (10) in Form eines sich in Förderrichtung erstreckenden Rotationsstranges (12) ausgebildet ist, wobei ein Fixierungszapfen (5, 6) zwecks Rotation des Formkörpers (1) mit dem Rotationsstrang (12) wechselwirkt,
wobei der erste Fixierungszapfen (5) mittels zumindest eines Anschlusskörpers (14) an zumindest ein Anschlusselement (7) angeschlossen ist, wobei der Anschlusskörper (14) auf dem zumindest einen, vorzugsweise auf den zumindest zwei Anschlusselementen (7) aufliegt, wobei der Anschlusskörper (14) in Längsrichtung des ersten Fixierungszapfens (5) verschiebbar ist,
**dadurch gekennzeichnet, dass** der Anschlusskörper (14) als scheibenförmiger bzw. plattenförmiger Anschlusskörper (14) ausgebildet ist.

2. Formkörper-Behandlungsvorrichtung nach Anspruch 1, **dadurch gekennzeichnet, dass** die zumindest eine Behandlungsstation als Behandlungskammer bzw. thermische Behandlungskammer (9) ausgebildet ist, in die die Formkörper (1) zur thermischen Behandlung eingeführt werden und wobei die Behandlungskammer (9) bevorzugt als thermische Aushärtkammer zum Aushärten der Formkörper (1) bzw. der Oberflächen der Formkörper (1) ausgebildet ist.

3. Formkörper-Behandlungsvorrichtung nach einem der Ansprüche 1 oder 2, **dadurch gekennzeichnet, dass** zumindest ein Fixierungszapfen (5, 6) vorzugsweise zumindest zwei bzw. beide Fixierungszapfen (5, 6) - in jeweils zumindest einem Drehlager (11) gelagert ist/sind und wobei vorzugsweise zumindest ein bzw. der erste Fixierungszapfen (5) über zumindest ein Drehlager (11) an zumindest ein Anschlusselement (7) des ersten Antriebsstranges (3) angeschlossen ist.

4. Formkörper-Behandlungsvorrichtung nach einem der Ansprüche 1 bis 3, **dadurch gekennzeichnet, dass** der Rotationsstrang (12) als Rotationskette und/oder als Rotationszahnstange ausgeführt ist und wobei der Fixierungszapfen (5, 6) mit zumindest einem an den Fixierungszapfen (5, 6) befestigen Ritzel (13) mit dem Rotationsstrang (12) kämmt.

5. Formkörper-Behandlungsvorrichtung nach einem Ansprüche 1 bis 4, **dadurch gekennzeichnet, dass** jedem der beiden Enden bzw. Stirnenden der zu fördernden Formkörper (1) zumindest ein bzw. ein Antriebsstrang (3, 4) zugeordnet ist, wobei der erste Fixierungszapfen (5) eines Formkörpers (1) an das zumindest eine Anschlusselement (7) des ersten Antriebsstranges (3) angeschlossen ist und wobei der zweite Fixierungszapfen (6) an den zweiten Antriebsstrang (4) angeschlossen ist.

6. Formkörper-Behandlungsvorrichtung nach einem der Ansprüche 1 bis 5, **dadurch gekennzeichnet, dass** die Dicke d des Anschlusskörpers (14) quer zur Förderrichtung bzw. in Längsrichtung eines Anschlusselementes (7) maximal 25 %, vorzugsweise maximal 20 % und bevorzugt maximal 15 % des Länge L der Anschlusselement (7) beträgt.

7. Formkörper-Behandlungsvorrichtung nach einem der Ansprüche 1 bis 6, **dadurch gekennzeichnet, dass** der zweite Fixierungszapfen (6) eines Formkörpers (1) - vorzugsweise mittels zumindest eines Drehlagers (11) - in bzw. auf zumindest einem bzw. einem an dem zweiten Antriebsstrang (4) fixierten Aufnahmeelement (15) aufgenommen ist.

8. Formkörper-Behandlungsvorrichtung nach einem der Ansprüche 1 bis 7, **dadurch gekennzeichnet, dass** zumindest ein Antriebsstrang (3, 4), vorzugsweise zumindest zwei Antriebsstränge (3, 4) als Antriebskette bzw. als Antriebsketten ausgebildet ist/sind.

9. Formkörper-Behandlungsvorrichtung nach einem der Ansprüche 1 bis 8, **dadurch gekennzeichnet, dass** die Anschlusselemente (7) den ersten Antriebsstrang (3) - vorzugsweise die erste Antriebskette - mit einem bzw. mit dem zweiten Antriebsstrang (4) - vorzugsweise mit der zweiten Antriebskette - verbinden, wobei die Anschlusselemente (7) bevorzugt als Anschlussstangen ausgebildet sind.

10. Formkörper-Behandlungsvorrichtung nach einem der Ansprüche 1 bis 9, **dadurch gekennzeichnet, dass** auf der einen Seite der Formkörper (1) neben dem ersten Antriebsstrang (3) - vorzugsweise neben der ersten Antriebskette - ein weiterer bzw. ein dritter Antriebsstrang (16) - vorzugsweise eine weitere bzw. eine dritte Antriebskette - angeordnet ist und sich in Förderrichtung erstreckt und wobei der erste Antriebsstrang (3) und der weitere bzw. dritte Antriebsstrang (16) durch die Anschlusselemente (7) - bevorzugt in Form von Anschlussstangen - miteinander verbunden sind.

11. Formkörper-Behandlungsvorrichtung nach einem der Ansprüche 1 bis 10, **dadurch gekennzeichnet, dass** der erste Antriebsstrang (3) - vorzugsweise die erste Antriebskette - zumindest zwei sich in Förderrichtung erstreckende Teil-Antriebsstränge (17, 18) - bevorzugt Teil-Antriebsketten - aufweist und wobei die beiden Teil-Antriebsstränge (17, 18) über die Anschlusselemente (7) - vorzugsweise in Form von Anschlussstangen - miteinander verbunden sind bzw. aneinander fixiert sind.

12. Formkörper-Behandlungsvorrichtung nach einem der Ansprüche 1 bis 11, **dadurch gekennzeichnet, dass** die Fixierungszapfen (5, 6) drehfest an dem Formkörper (1) fixiert sind, vorzugsweise in den Formkörper (1) eingeschraubt sind.

## Claims

1. A moulded-body treatment device with at least one treatment station, into which moulded bodies (1) can be introduced for treatment by means of a drive device (2), wherein the drive device (2) comprises at least one drive train (3, 4) extending in the conveying direction of the moulded bodies, wherein the drive train (3, 4) - preferably at least two drive trains (3, 4) - can be moved in the conveying direction of the moulded bodies (1),
wherein at least two fixing pins (5, 6) are provided, which can be or are fixed at opposite ends of the moulded body (1), wherein at least one fixing pin (5, 6) is connected to a drive train (3, 4) - preferably two fixing pins (5, 6) are connected in each case to a drive train (3, 4), so that the assigned moulded body (1) can be moved in the conveying direction by means of the moved drive train (3, 4) or by means of the moved drive trains (3, 4),
wherein at least a first drive train (3) comprises a plurality of connection elements (7) extending transversely to the conveying direction, wherein the first fixing pin (5) assigned to this first drive train (3) is connected or can be connected to at least one connection element (7) of this first drive train (3), wherein length L of at least some of these connection elements (7), preferably of all the connection elements (7),
- corresponds to at least 30% of length l_{z} of the pin section of the first fixing pin (5), which pin section (8) extends between the moulded body (1) or the end of the moulded body (1) facing towards the first drive train (3) and the first drive train (3)
and/or
- amounts to at least 30 mm, especially at least 35 mm and preferably at least 50 mm,
wherein at least one rotation device (10) for rotating the moulded body (1) about its longitudinal axis is provided, wherein the rotation device (10) is constituted in the form of a rotation train (12) extending in the conveying direction, wherein a fixing pin (5, 6) interacts with the rotation train (12) for the purpose of rotating the moulded body (1),
wherein the first fixing pin (5) is connected to at least one connection element (7) by means of at least one connection body (14),
wherein the connection body (14) rests on the at least one, preferably on the at least two connection elements (7),
wherein the connection body (14) is displaceable in the longitudinal direction of the first fixing pin (5),
**characterised in that**
the connection body (14) is constituted as a disc-shaped or plate-shaped connection body (14).

2. The moulded-body treatment device according to claim 1, **characterised in that** the at least one treatment station is constituted as a treatment chamber or heat treatment chamber (9), into which the moulded bodies (1) are introduced for the heat treatment and wherein the treatment chamber (9) is preferably constituted as a thermal hardening chamber for hardening the moulded bodies (1) or the surfaces of the moulded bodies (1).

3. The moulded-body treatment device according to any one of claims 1 or 2, **characterised in that** at least one fixing pin (5, 6), preferably at least two or both fixing pins (5, 6) is/are mounted in each case in at least one rotary bearing (11) and wherein preferably at least one or the first fixing pin (5) is connected via at least one rotary bearing (11) to at least one connection element (7) of the first drive train (3).

4. The moulded-body treatment device according to any one of claims 1 to 3, **characterised in that** the rotation train (12) is constituted as a rotation chain and/or as a rotation toothed rod and wherein the fixing pin (5, 6) engages, with at least one pinion fastened to the fixing pin (5, 6), with the rotation train (12).

5. The moulded-body treatment device according to any one of claims 1 to 4, **characterised in that** at least one or one drive train (3, 4) is assigned to each of the two ends or end faces of the moulded bodies (1) to be conveyed, wherein the first fixing pin (5) of a moulded body (1) is connected to the at least one connection element (7) of the first drive train (3) and wherein the second fixing pin (6) is connected to the second drive train (4).

6. The moulded-body treatment device according to any one of claims 1 to 5, **characterised in that** thickness d of the connection body (14) transversely to the conveying direction or in the longitudinal direction of the connection element (7) amounts to a maximum of 25%, preferably a maximum of 20% and preferably a maximum of 15% of length L of the connection element (7).

7. The moulded-body treatment device according to any one of claims 1 to 6, **characterised in that** the second fixing pin (6) of a moulded body (1) is held in or on at least one holding element (15) fixed to the second drive train (4) - preferably by means of at least one rotary bearing (11).

8. The moulded-body treatment device according to any one of claims 1 to 7, **characterised in that** at least one drive train (3, 4), preferably at least two drive trains (3, 4) is/are constituted as a drive chain or as drive chains.

9. The moulded-body treatment device according to any one of claims 1 to 8, **characterised in that** the connection elements (7) connect the first drive train (3) - preferably the first drive chain - to a or to the second drive train (4) - preferably to the second drive chain, wherein the connection elements are preferably constituted as connection rods.

10. The moulded-body treatment device according to any one of claims 1 to 9, **characterised in that** a further or a third drive train (16) - preferably a further or a third drive chain - is arranged on the one side of the moulded bodies (1) beside the first drive train (3) - preferably beside the first drive chain - and extends in the conveying direction and wherein the first drive train (3) and the further or third drive train (16) are connected together by the connection elements (7) -preferably in the form of connection rods.

11. The moulded-body treatment device according to any one of claims 1 to 10, **characterised in that** the first drive train (3) - preferably the first drive chain - comprises at least two partial drive trains (17, 18) - preferably partial drive chains - extending in the conveying direction and wherein the two partial drive trains (17, 18) are connected together or fixed to one another by means of the connection elements (7) - preferably in the form of connection rods.

12. The moulded-body treatment device according to any one of claims 1 to 11, **characterised in that** the fixing pins (5, 6) are fixed non-rotatably to the moulded body (1), preferably are screwed into the moulded body (1).

## Revendications

1. Dispositif de traitement de corps moulés, doté d'au moins un poste de traitement dans lequel des corps moulés (1) peuvent être introduits pour leur traitement au moyen d'un système d'entraînement (2,) le système d'entraînement (2) comportant au moins un tronçon d'entraînement (3, 4) s'étendant dans la direction de convoyage des corps moulés,
le tronçon d'entraînement (3, 4) de préférence au moins deux tronçons d'entraînement (3, 4) étant déplaçable(s) dans la direction de convoyage des corps moulés (1),
au moins deux tenons de fixation (5, 6) étant prévus, qui peuvent se fixer, respectivement qui sont fixés sur des extrémités opposées du corps moulé (1), au moins un tenon de fixation (5, 6) étant raccordé sur un tronçon d'entraînement (3, 4) de préférence deux tenons de fixation (5, 6) étant raccordés chacun sur un tronçon d'entraînement (3, 4), de sorte que le corps moulé associé soit déplaçable au moyen du tronçon d'entraînement (3, 4) en mouvement, respectivement au moyen des tronçons d'entraînement (3, 4) en mouvement dans la direction de convoyage,
au moins un premier tronçon d'entraînement (3) comportant une pluralité d'éléments de raccordement (7) qui s'étendent à la transversale de la direction de convoyage, le premier tenon de fixation (5) associé audit premier tronçon d'entraînement (3) étant raccordé ou susceptible d'être raccordé sur au moins un élément de raccordement (7) dudit premier tronçon d'entraînement (3), la longueur d'au moins une partie desdits éléments de raccordement (7), de préférence de tous les éléments de raccordement (7)
- correspondant à au moins 30 % de la longueur **l_{z}** du segment de tenon du premier tenon de fixation (5), lequel segment de tenon (8) s'étend entre l'extrémité du corps moulé (1) ou du premier tronçon d'entraînement (3) qui fait face au corps moulé (1) ou au premier tronçon d'entraînement (3)
et/ou
- étant d'au moins 30 mm, de préférence d'au moins 35 mm et de manière préférentielle, d'au moins 50 mm,
au moins un système de rotation (10) étant prévu pour la rotation des corps moulés autour de leur axe longitudinal, le système de rotation (10) étant conçu sous la forme d'un tronçon de rotation (12) s'étendant dans la direction de convoyage, un tenon de fixation (5, 6) interagissant avec le tronçon de rotation (12) pour la rotation du corps moulé (1),
le premier tenon de fixation (5) étant raccordé au moyen d'au moins un organe de raccordement (14) sur au moins un élément de raccordement (7),
l'organe de raccordement (14) reposant sur l'au moins un, de préférence sur les au moins deux éléments de raccordement (7),
l'organe de raccordement (14) étant déplaçable dans la direction longitudinale du premier tenon de fixation (5),
**caractérisé en ce que** l'organe de raccordement (14) est conçu comme un organe de raccordement (14) en forme de disque ou en forme de plaque.

2. Dispositif de traitement de corps moulés selon la revendication 1, **caractérisé en ce que** l'au moins un poste de traitement est conçu en tant que chambre de traitement ou en tant que chambre de traitement thermique (9) dans laquelle on introduit les corps moulés pour un traitement thermique et la chambre de traitement (9) étant conçue de préférence en tant que chambre de durcissement thermique pour faire durcir les corps moulés (1) ou les surfaces des corps moulés (1) .

3. Dispositif de traitement de corps moulés selon l'une quelconque des revendications 1 ou 2, **caractérisé en ce qu'**au moins un tenon de fixation (5, 6), de préférence au moins deux, ou les deux tenons de fixation (5, 6) est/sont logé(s) chacun dans au moins un pivot (11) et de préférence au moins un ou le premier tenon de fixation (5) étant raccordé par l'intermédiaire d'au moins un pivot (11) sur au moins un élément de raccordement (7) du premier tronçon d'entraînement (3).

4. Dispositif de traitement de corps moulés selon l'une quelconque des revendications 1 à 3, **caractérisé en ce que** le tronçon de rotation (12) est réalisé en tant que chaîne de rotation et/ou en tant que crémaillère de rotation et le tenon de fixation (5, 6) s'engrenant dans le tronçon de rotation (12) par au moins un pignon (13) fixé sur les tenons de fixation (5, 6).

5. Dispositif de traitement de corps moulés selon l'une quelconque des revendications 1 à 4, **caractérisé en ce qu'**à chacune des deux extrémités ou extrémités frontales des corps moulés (1) qui doivent être convoyés est associé au moins un ou un tronçon d'entraînement (3, 4), le premier tenon de fixation (5) d'un corps moulé (1) étant raccordé sur l'au moins un élément de raccordement (7) du premier tronçon d'entraînement (3 et le deuxième tenon de fixation (6) étant raccordé sur le deuxième tronçon d'entraînement (4) .

6. Dispositif de traitement de corps moulés selon l'une quelconque des revendications 1 à 5, **caractérisé en ce qu'**à la transversale de la direction de convoyage ou dans la direction longitudinale d'un élément de raccordement (7), l'épaisseur **d** de l'organe de raccordement (14) correspond au maximum à 25 %, de préférence au maximum à 20 % et de manière préférentielle au maximum à 15 % de la longueur **L** de l'élément de raccordement (7).

7. Dispositif de traitement de corps moulés selon l'une quelconque des revendications 1 à 6, **caractérisé en ce que** le deuxième tenon de fixation (6) d'un corps moulé (1) est logé (de préférence au moyen d'au moins un pivot (11)) dans ou sur un élément de logement (15) ou un élément de logement fixé sur le deuxième tronçon d'entraînement (4).

8. Dispositif de traitement de corps moulés selon l'une quelconque des revendications 1 à 7, **caractérisé en ce qu'**au moins un tronçon d'entraînement (3, 4), de préférence au moins deux tronçons d'entraînement (3, 4) est/sont conçu(s) en tant que chaîne d'entraînement ou en tant que chaînes d'entraînement.

9. Dispositif de traitement de corps moulés selon l'une quelconque des revendications 1 à 8, **caractérisé en ce que** les éléments de raccordement (7) relient le premier tronçon d'entraînement (3) (de préférence la première chaîne d'entraînement) avec un ou avec le deuxième tronçon d'entraînement (4) (de préférence avec la deuxième chaîne d'entraînement), les éléments de raccordement (7) étant conçus de préférence en tant de barres de raccordement.

10. Dispositif de traitement de corps moulés selon l'une quelconque des revendications 1 à 9, **caractérisé en ce que** sur l'une des faces des corps moulés (1), à côté du premier tronçon d'entraînement (3) (de préférence à côté de la première chaîne d'entraînement) est placé et s'étend dans la direction de convoyage un autre ou un troisième tronçon d'entraînement (16) (de préférence une autre ou une troisième chaîne d'entraînement) et le premier tronçon d'entraînement (3) et l'autre ou troisième tronçon d'entraînement (16) étant reliés l'un à l'autre par les éléments de raccordement (7) (de préférence sous la forme de barres de raccordement).

11. Dispositif de traitement de corps moulés selon l'une quelconque des revendications 1 à 10, **caractérisé en ce que** le premier tronçon d'entraînement (3) (de préférence la première chaîne d'entraînement) comporte au moins deux tronçons partiels d'entraînement (17, 18) (de préférence chaînes partielles d'entraînement) qui s'étendent dans la direction de convoyage et les deux tronçons partiels d'entraînement (17, 18) étant fixés l'un avec l'autre ou l'un à l'autre par l'intermédiaire des éléments de raccordement (7) (de préférence sous la forme de barres de raccordement)..

12. Dispositif de traitement de corps moulés selon l'une quelconque des revendications 1 à 11, **caractérisé en ce que** les tenons de fixation (5, 6) sont fixés de manière solidaire en rotation sur le corps moulé (1), de préférence sont vissés dans le corps moulé (1).
